# EUROPEAN PATENT APPLICATION

(11) **EP 2 120 203 A1**
(43) Date of publication of application: **18.11.2009**
(21) Application number: 09158798.0
(22) Date of filing: 27.04.2009
(51) Int. Cl.: G06Q 30/00

(54) **Method, apparatus and computer program product for managing advertising**

(30) Priority: 12.05.2008 US 118890
(71) Applicant: Nokia Corporation, 02150 Espoo (FI)
(72) Inventor: Muhonen, Ahti, FI-04680, Hirvihaara (FI); Haumont, Serge, FI-00170, Helsinki (FI)
(74) Representative: Tognetty, Virpi Maria

(57) **Abstract**

A method, apparatus and computer program product are provided for managing advertising on a website or the like. In this regard, one or more advertisement items may be provided that may be used on a website. A selection from the one or more advertisement items may be made, indicating the intent to include advertising content associated with the selection on a website. In this regard, a link associated with the selected advertisement item may be provided for inclusion on the website. A request for the advertising content may also be received via the link when, for example, a user navigates to the website, and the advertising content associated with the selected advertisement item may be provided in response to the request.

## Description

### FIELD OF THE INVENTION

Embodiments of the present invention relate generally to advertising and, more particularly, relate to an apparatus, method and a computer program product for managing the content of advertising.

### BACKGROUND OF THE INVENTION

The Internet and websites on the Internet, which may include web pages, widgets, and other means of providing information on the Internet, have brought about a revolution in information sharing. Information is now available on virtually any topic and may be readily disseminated to any user. Due to the ease of accessing and accessing information now prevalent via the Internet, users have become dependant on the Internet to retrieve information for both personal and business use. For example, users now check websites daily, or even more frequently, via the Internet to acquire the most up to date information on news, sports, and events. Users also join social networking websites via the Internet and use personally developed websites to interact with friends, family, and business contacts.

As users' dependence on the Internet has increased, advertisers have realized a new avenue for promoting products and services, and the Internet has now become an advertising phenomenon. Services that users' desire from websites, such as news information, social networking, or the like, may be realized on business models that derive revenues solely from advertising. Further, even business owners that derive revenue mainly from selling products and services, create websites on the Internet, to not only sell there own products and services, but also to generate an alternative revenue stream by selling advertising on their website.

Website owners often contract with advertisement providers to generate the advertising revenue stream. In this regard, a website owner often provides a portion of the website's space to the advertisement provider to place various advertisements. The website owner may realize revenue simply by allowing advertisements to be placed on the website, or by receiving a commission if users of the website select and/or purchase products or services via the advertisement on an owner's website. Advertising providers often develop relationships with various products and services and advertise those products and services on the owner's website. In this regard, the advertisements placed on an owner's website are often not static. Rather, different products or services may be advertised overtime and, in some instances, each time a user visits the owner's website.

Due to the dynamic nature of the advertisements supplied by the advertising providers, advertisements may be provided that do not coordinate with, or may even contradict, the content of the website and the desires of the users. For example, an owner's website may be directed to helping tobacco smokers stop smoking. As such, an advertisement for cigarettes on the website would not coordinate with, and in this case contradicts, the content of the website. Similarly, advertisements may be provided that a user of the website does not prefer, or may even find offensive. For example, a tobacco smoker may prefer not to see advertisements for products that can help break a smoking habit.

Accordingly, it may be desirable to develop mechanisms by which advertisements on websites coordinate with the desires of the website owners. Further, it may be desirable to develop mechanisms by which advertisements on websites also target products and services that a user of the website prefers, or products and services that do not offend a user of the website.

### BRIEF SUMMARY OF THE INVENTION

A method, apparatus and computer program product are provided for managing advertising on a website or the like. In this regard, exemplary embodiments of the present invention may provide one or more advertisement items that may be used on a website. A selection from the one or more provided advertisement items may be made, indicating the intent to include advertising content associated with the selection on a website. In this regard, a link associated with the selected advertisement item may be provided for inclusion on the website. Exemplary embodiments may also receive a request for the advertising content via the link when, for example, a user navigates to the website, and the advertising content associated with the selected advertisement item may be provided in response to the request.

In one exemplary embodiment, a method for managing advertising is provided. The method may include providing one or more advertisement items, receiving an advertisement item selection from the one or more advertisement items, providing a link associated with the selected advertisement item, receiving a request via the link, and providing advertising content associated with the selected advertisement item in response to the request.

In another exemplary embodiment, a computer program product for managing advertising is provided. The computer program product may include at least one computer-readable storage medium having computer-readable program code portions stored therein. The computer-readable program code portions may include a first executable portion, a second executable portion, a third executable portion, a fourth executable portion, and a fifth executable portion. The first executable portion may be for providing one or more advertisement items. The second executable portion may be for receiving an advertisement item selection from the one or more advertisement items. The third executable portion may be for providing a link associated with the selected advertisement item. The fourth executable portion may be for receiving a request via the link, and the fifth executable portion may be for providing advertising content associated with the selected advertisement item in response to the request.

In another exemplary embodiment, an apparatus for managing advertising is provided. The apparatus may include a processor. The processor may be configured to provide one or more advertisement items, receive an advertisement item selection from the one or more advertisement items, provide a link associated with the selected advertisement item, receive a request via the link, and provide advertising content associated with the selected advertisement item in response to the request.

In one exemplary embodiment, an apparatus for managing advertising is provided. The apparatus may include means for providing one or more advertisement items, means for receiving an advertisement item selection from the one or more advertisement items, means for providing a link associated with the selected advertisement item, means for receiving a request via the link, and means for providing advertising content associated with the selected advertisement item in response to the request.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:

FIG. 1 is a schematic block diagram of a mobile terminal according to an exemplary embodiment of the present invention;

FIG. 2 is a schematic block diagram of a wireless communications system according to an exemplary embodiment of the present invention;

FIG. 3 illustrates a block diagram showing an apparatus for managing advertising according to an exemplary embodiment of the present invention;

FIGs. 4-7 are a flowcharts according to exemplary methods of managing advertising according to an exemplary embodiments of the present invention; and

FIGs. 8a - 8c illustrate advertising preference modification interfaces according to an exemplary embodiment of the present invention.

### DETAILED DESCRIPTION OF THE INVENTION

Embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like reference numerals refer to like elements throughout.

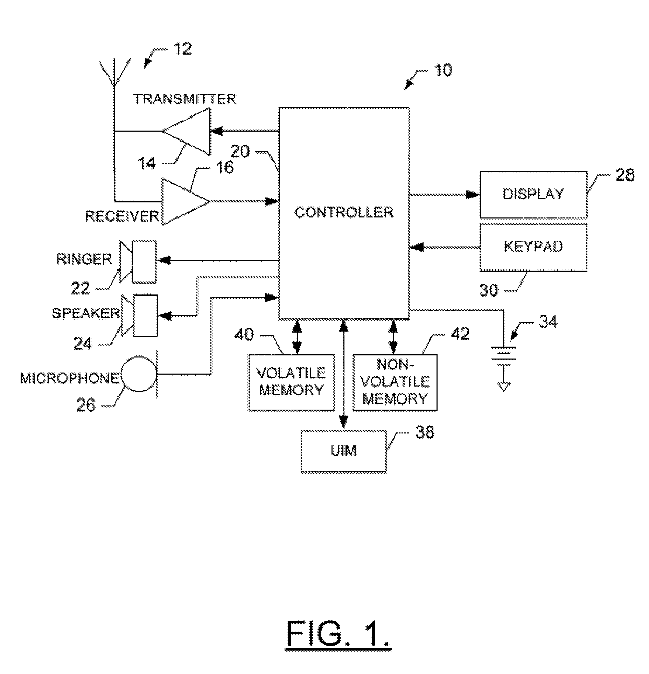

FIG. 1, one aspect of the invention, illustrates a block diagram of a mobile terminal 10 that would benefit from embodiments of the present invention. It should be understood, however, that a mobile telephone as illustrated and hereinafter described is merely illustrative of one type of mobile terminal that would benefit from embodiments of the present invention and, therefore, should not be taken to limit the scope of embodiments of the present invention. While several embodiments of the mobile terminal 10 are illustrated and will be hereinafter described for purposes of example, other types of mobile terminals, such as portable digital assistants (PDAs), pagers, mobile televisions, gaming devices, laptop computers, cameras, video recorders, audio/video player, radio, GPS devices, or any combination of the aforementioned, and other types of voice and text communications systems, can readily employ embodiments of the present invention.

In addition, while several embodiments of the method of the present invention are performed or used by a mobile terminal 10, the method may be employed by other than a mobile terminal. Moreover, the system and method of embodiments of the present invention will be primarily described in conjunction with mobile communications applications. It should be understood, however, that the system and method of embodiments of the present invention can be utilized in conjunction with a variety of other applications, both in the mobile communications industries and outside of the mobile communications industries.

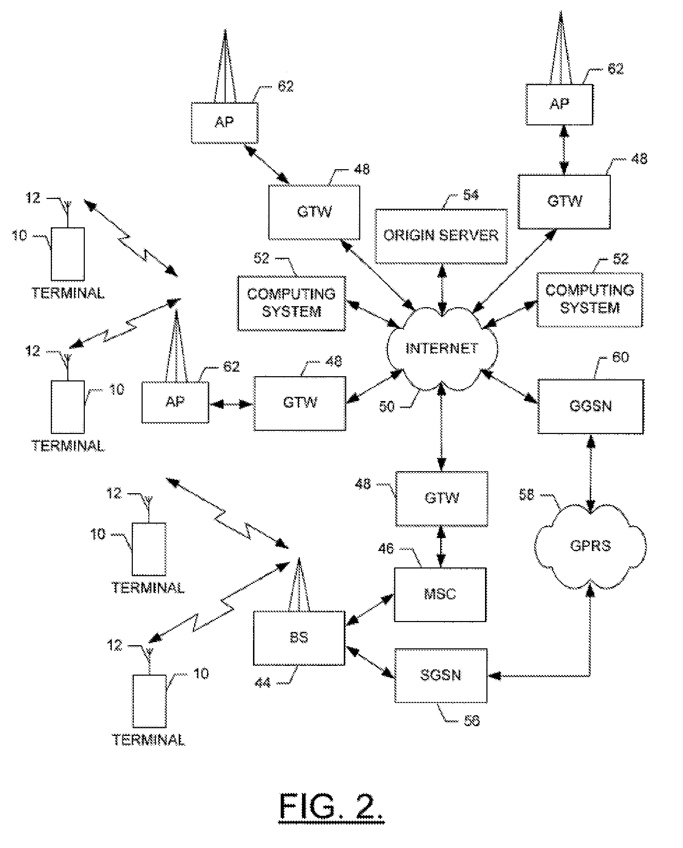

The mobile terminal 10 may include an antenna 12 (or multiple antennas) in operable communication with a transmitter 14 and a receiver 16. The mobile terminal 10 may further include an apparatus, such as a controller 20 or other processor, that provides signals to and receives signals from the transmitter 14 and receiver 16, respectively. The signals include signaling information in accordance with the air interface standard of the applicable cellular system, and also user speech, received data and/or user generated data. In this regard, the mobile terminal 10 is capable of operating with one or more air interface standards, communication protocols, modulation types, and access types. By way of illustration, the mobile terminal 10 is capable of operating in accordance with any of a number of first, second, third and/or fourth-generation communication protocols or the like. For example, the mobile terminal 10 may be capable of operating in accordance with second-generation (2G) wireless communication protocols IS-136 (time division multiple access (TDMA)), GSM (global system for mobile communication), and IS-95 (code division multiple access (CDMA)), or with third-generation (3G) wireless communication protocols, such as Universal Mobile Telecommunications System (UMTS), CDMA2000, wideband CDMA (WCDMA) and time division-synchronous CDMA (TD-SCDMA), with fourth-generation (4G) wireless communication protocols or the like. As an alternative (or additionally), the mobile terminal 10 may be capable of operating in accordance with non-cellular communication mechanisms. For example, the mobile terminal 10 may be capable of communication in a wireless local area network (WLAN) or other communication networks described below in connection with FIG. 2.

It is understood that the apparatus, such as the controller 20, may include circuitry desirable for implementing audio and logic functions of the mobile terminal 10. For example, the controller 20 may be comprised of a digital signal processor device, a microprocessor device, and various analog to digital converters, digital to analog converters, and other support circuits. Control and signal processing functions of the mobile terminal 10 are allocated between these devices according to their respective capabilities. The controller 20 thus may also include the functionality to convolutionally encode and interleave message and data prior to modulation and transmission. The controller 20 can additionally include an internal voice coder, and may include an internal data modem. Further, the controller 20 may include functionality to operate one or more software programs, which may be stored in memory. For example, the controller 20 may be capable of operating a connectivity program, such as a conventional Web browser. The connectivity program may then allow the mobile terminal 10 to transmit and receive Web content, such as location-based content and/or other web page content, according to a Wireless Application Protocol (WAP), Hypertext Transfer Protocol (HTTP) and/or the like, for example.

The mobile terminal 10 may also comprise a user interface including an output device such as a conventional earphone or speaker 24, a ringer 22, a microphone 26, a display 28, and a user input interface, all of which are coupled to the controller 20. The user input interface, which allows the mobile terminal 10 to receive data, may include any of a number of devices allowing the mobile terminal 10 to receive data, such as a keypad 30, a touch display (not shown) or other input device. In embodiments including the keypad 30, the keypad 30 may include the conventional numeric (0-9) and related keys (#, *), and other hard and soft keys used for operating the mobile terminal 10. Alternatively, the keypad 30 may include a conventional QWERTY keypad arrangement. The keypad 30 may also include various soft keys with associated functions. In addition, or alternatively, the mobile terminal 10 may include an interface device such as a joystick or other user input interface. The mobile terminal 10 further includes a battery 34, such as a vibrating battery pack, for powering various circuits that are required to operate the mobile terminal 10, as well as optionally providing mechanical vibration as a detectable output.

The mobile terminal 10 may further include a user identity module (UIM) 38.
The UIM 38 is typically a memory device having a processor built in. The UIM 38 may include, for example, a subscriber identity module (SIM), a universal integrated circuit card (UICC), a universal subscriber identity module (USIM), a removable user identity module (R-UIM), etc. The UIM 38 typically stores information elements related to a mobile subscriber. In addition to the UIM 38, the mobile terminal 10 may be equipped with memory. For example, the mobile terminal 10 may include volatile memory 40, such as volatile Random Access Memory (RAM) including a cache area for the temporary storage of data. The mobile terminal 10 may also include other non-volatile memory 42, which can be embedded and/or may be removable. The non-volatile memory 42 can additionally or alternatively comprise an electrically erasable programmable read only memory (EEPROM), flash memory or the like, such as that available from the SanDisk Corporation of Sunnyvale, California, or Lexar Media Inc. of Fremont, California. The memories can store any of a number of pieces of information, and data, used by the mobile terminal 10 to implement the functions of the mobile terminal 10. For example, the memories can include an identifier, such as an international mobile equipment identification (IMEI) code, capable of uniquely identifying the mobile terminal 10. Furthermore, the memories may store instructions for determining cell id information. Specifically, the memories may store an application program for execution by the controller 20, which determines an identity of the current cell, i.e., cell id identity or cell id information, with which the mobile terminal 10 is in communication.

FIG. 2 is a schematic block diagram of a wireless communications system according to an exemplary embodiment of the present invention. Referring now to FIG. 2, an illustration of one type of system that would benefit from embodiments of the present invention is provided. The system includes a plurality of network devices. As shown, one or more mobile terminals 10 may each include an antenna 12 for transmitting signals to and for receiving signals from a base site or base station (BS) 44. The base station 44 may be a part of one or more cellular or mobile networks each of which includes elements required to operate the network, such as a mobile switching center (MSC) 46. As well known to those skilled in the art, the mobile network may also be referred to as a Base Station/MSC/Interworking function (BMI). In operation, the MSC 46 is capable of routing calls to and from the mobile terminal 10 when the mobile terminal 10 is making and receiving calls. The MSC 46 can also provide a connection to landline trunks when the mobile terminal 10 is involved in a call. In addition, the MSC 46 can be capable of controlling the forwarding of messages to and from the mobile terminal 10, and can also control the forwarding of messages for the mobile terminal 10 to and from a messaging center. It should be noted that although the MSC 46 is shown in the system of FIG. 2, the MSC 46 is merely an exemplary network device and embodiments of the present invention are not limited to use in a network employing an MSC.

The MSC 46 can be coupled to a data network, such as a local area network (LAN), a metropolitan area network (MAN), and/or a wide area network (WAN). The MSC 46 can be directly coupled to the data network. In one typical embodiment, however, the MSC 46 is coupled to a gateway device (GTW) 48, and the GTW 48 is coupled to a WAN, such as the Internet 50. In turn, devices such as processing elements (e.g., personal computers, server computers or the like) can be coupled to the mobile terminal 10 via the Internet 50. For example, as explained below, the processing elements can include one or more processors associated with a computing system 52 (two shown in FIG. 2), origin server 54 (one shown in FIG. 2) or the like, as described below.

The BS 44 can also be coupled to a serving GPRS (General Packet Radio Service) support node (SGSN) 56. As known to those skilled in the art, the SGSN 56 is typically capable of performing functions similar to the MSC 46 for packet switched services. The SGSN 56, like the MSC 46, can be coupled to a data network, such as the Internet 50. The SGSN 56 can be directly coupled to the data network. In a more typical embodiment, however, the SGSN 56 is coupled to a packet-switched core network, such as a GPRS core network 58. The packet-switched core network is then coupled to another GTW 48, such as a gateway GPRS support node (GGSN) 60, and the GGSN 60 is coupled to the Internet 50. In addition to the GGSN 60, the packet-switched core network can also be coupled to a GTW 48. Also, the GGSN 60 can be coupled to a messaging center. In this regard, the GGSN 60 and the SGSN 56, like the MSC 46, may be capable of controlling the forwarding of messages, such as MMS messages. The GGSN 60 and SGSN 56 may also be capable of controlling the forwarding of messages for the mobile terminal 10 to and from the messaging center.

In addition, by coupling the SGSN 56 to the GPRS core network 58 and the GGSN 60, devices such as a computing system 52 and/or origin server 54 may be coupled to the mobile terminal 10 via the Internet 50, SGSN 56 and GGSN 60. In this regard, devices such as the computing system 52 and/or origin server 54 may communicate with the mobile terminal 10 across the SGSN 56, GPRS core network 58 and the GGSN 60. By directly or indirectly connecting mobile terminals 10 and the other devices (e.g., computing system 52, origin server 54, etc.) to the Internet 50, the mobile terminals 10 may communicate with the other devices and with one another, such as according to the Hypertext Transfer Protocol (HTTP) and/or the like, to thereby carry out various functions of the mobile terminals 10.

Although not every element of every possible mobile network is shown and described herein, it should be appreciated that the mobile terminal 10 may be coupled to one or more of any of a number of different networks through the BS 44. In this regard, the network(s) may be capable of supporting communication in accordance with any one or more of a number of first-generation (1G), second-generation (2G), 2.5G, third-generation (3G), 3.9G, fourth-generation (4G) mobile communication protocols or the like. For example, one or more of the network(s) can be capable of supporting communication in accordance with 2G wireless communication protocols IS-136 (TDMA), GSM, and IS-95 (CDMA). Also, for example, one or more of the network(s) can be capable of supporting communication in accordance with 2.5G wireless communication protocols GPRS, Enhanced Data GSM Environment (EDGE), or the like. Further, for example, one or more of the network(s) can be capable of supporting communication in accordance with 3G wireless communication protocols such as a UMTS network employing WCDMA radio access technology. Some narrow-band analog mobile phone service (NAMPS), as well as total access communication system (TACS), network(s) may also benefit from embodiments of the present invention, as should dual or higher mode mobile stations (e.g., digital/analog or TDMA/CDMA/analog phones).

The mobile terminal 10 can further be coupled to one or more wireless access points (APs) 62. The APs 62 may comprise access points configured to communicate with the mobile terminal 10 in accordance with techniques such as, for example, radio frequency (RF), infrared (IrDA) or any of a number of different wireless networking techniques, including WLAN techniques such as IEEE 802.11 (e.g., 802.11a, 802.11b, 802.11g, 802.11n, etc.), world interoperability for microwave access (WiMAX) techniques such as IEEE 802.16, and/or wireless Personal Area Network (WPAN) techniques such as IEEE 802.15, BlueTooth (BT), ultra wideband (UWB) and/or the like. The APs 62 may be coupled to the Internet 50. Like with the MSC 46, the APs 62 can be directly coupled to the Internet 50. In one embodiment, however, the APs 62 are indirectly coupled to the Internet 50 via a GTW 48. Furthermore, in one embodiment, the BS 44 may be considered as another AP 62. As will be appreciated, by directly or indirectly connecting the mobile terminals 10 and the computing system 52, the origin server 54, and/or any of a number of other devices, to the Internet 50, the mobile terminals 10 can communicate with one another, the computing system, etc., to thereby carry out various functions of the mobile terminals 10, such as to transmit data, content or the like to, and/or receive content, data or the like from, the computing system 52. As used herein, the terms "data," "content," "information" and similar terms may be used interchangeably to refer to data capable of being transmitted, received and/or stored in accordance with embodiments of the present invention. Thus, use of any such terms should not be taken to limit the spirit and scope of embodiments of the present invention.

Although not shown in FIG. 2, in addition to or in lieu of coupling the mobile terminal 10 to computing systems 52 across the Internet 50, the mobile terminal 10 and computing system 52 may be coupled to one another and communicate in accordance with, for example, RF, BT, IrDA or any of a number of different wireline or wireless communication techniques, including LAN, WLAN, WiMAX, UWB techniques and/or the like. One or more of the computing systems 52 can additionally, or alternatively, include a removable memory capable of storing content, which can thereafter be transferred to the mobile terminal 10. Further, the mobile terminal 10 can be coupled to one or more electronic devices, such as printers, digital projectors and/or other multimedia capturing, producing and/or storing devices (e.g., other terminals). Like with the computing systems 52, the mobile terminal 10 may be configured to communicate with the portable electronic devices in accordance with techniques such as, for example, RF, BT, IrDA or any of a number of different wireline or wireless communication techniques, including universal serial bus (USB), LAN, WLAN, WiMAX, UWB techniques and/or the like.

In an exemplary embodiment, content or data may be communicated over the system of FIG. 2 between a mobile terminal, which may be similar to the mobile terminal 10 of FIG. 1, and a network device of the system of FIG. 2 in order to, for example, execute applications or establish communication (for example, for purposes of content or information sharing) between the mobile terminal 10 and other mobile terminals. As such, it should be understood that the system of FIG. 2 need not be employed for communication between mobile terminals or between a network device and the mobile terminal, but rather FIG. 2 is merely provided for purposes of example. Furthermore, it should be understood that embodiments of the present invention may be resident on a communication device such as the mobile terminal 10, and/or may be resident on a server, personal computer or other device, absent any communication with the system of FIG. 2.

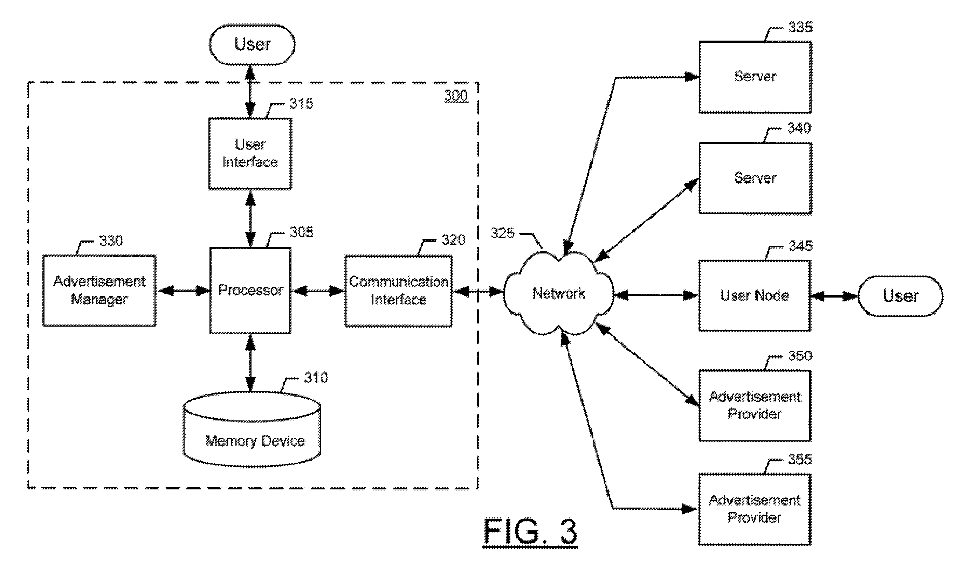

An exemplary embodiment of the invention will now be described with reference to FIG. 3, in which certain elements of an apparatus 300 for enabling advertising management are displayed. The apparatus 300 of FIG. 3 may be embodied as or otherwise employed, for example, on a network device such as a server of FIG. 2, such as origin server 54, computing system 52, or the like. However, it should be noted that the system of FIG. 3, may also be employed on a variety of other devices, both mobile (e.g., the mobile terminal 10) and fixed, and therefore, embodiments of the present invention should not be limited to application on devices such as servers. It should also be noted that while FIG. 3 illustrates one example of a configuration of an apparatus for enabling advertising management, numerous other configurations may also be used to implement embodiments of the present invention.

Referring now to FIG. 3, an apparatus for enabling advertising management is provided. The apparatus may include or otherwise be in communication with a processor 305, a user interface 315, a communication interface 320 and a memory device 310. The memory device 310 may include, for example, volatile and/or non-volatile memory (e.g., volatile memory 40 and/or non-volatile memory 42). The memory device 310 may be configured to store information, data, applications, instructions or the like for enabling the apparatus to carry out various functions in accordance with exemplary embodiments of the present invention. For example, the memory device 310 could be configured to buffer input data for processing by the processor 305. Additionally or alternatively, the memory device 310 could be configured to store instructions for execution by the processor 310. As yet another alternative, the memory device 310 may be one of a plurality of databases that store information in the form of static and/or dynamic information, for example, in association with advertisement items, advertising content, links to advertising content, advertising preferences or the like.

The processor 305 may be embodied in a number of different ways. For example, the processor 305 may be embodied as a microprocessor, a coprocessor, a controller or various other processing means or devices including integrated circuits such as, for example, an ASIC (application specific integrated circuit) or FPGA (field programmable gate array). In an exemplary embodiment, the processor 305 may be configured to execute instructions stored in the memory device 310 or otherwise accessible to the processor 305.

The user interface 315 may be in communication with the processor 305 to receive an indication of a user input at the user interface 315 and/or to provide an audible, visual, mechanical or other output to the user. As such, the user interface 315 may include, for example, a keyboard, a mouse, a joystick, a touch screen display, a conventional display, a microphone, a speaker, or other input/output mechanisms. In an exemplary embodiment in which the apparatus is embodied as a server, the user interface 315 may be limited, or even eliminated.

The communication interface 325 may be embodied as any device or means embodied in either hardware, software, or a combination of hardware and software that is configured to receive and/or transmit data from/to a network and/or any other device or module in communication with the apparatus 300. In this regard, the communication interface 315 may include, for example, an antenna, a transmitter, a receiver, a transceiver and/or supporting hardware and/or software for enabling communications with network 325, which may be any type of wired or wireless network. Via communication interface 320 and network 325, apparatus 300 can be in communication with servers 335, 340, user node 345, and/or advertisement providers 350, 355.

In this regard, the servers 335, 340 may be any type of electronic device for storing, retrieving, computing, transmitting, and receiving data. For example, the servers 335, 340 may be web servers, database servers, file servers, or the like. The user node 345 may also be any type of device for storing, retrieving, computing, transmitting and receiving data. For example, the user node 345 may be a personal computer, a mobile terminal, such as mobile terminal 10, or the like. The advertisement providers may be network entities that provide advertising data as further described below.

The advertisement manager 330 may be any means or device embodied in hardware, software, or a combination of hardware and software that is configured to carry out the functions of the advertisement manager 330 as described herein. In an exemplary embodiment, the processor 305 may be embodied as or otherwise control an advertisement manager 330.

In this regard, for example, the advertisement manager 330 (which in an exemplary embodiment may be embodied at a server or other network device) may be configured to receive one or more advertisement items and provide the one or more advertisement items for eventual selection by a website owner/operator, also known as an advertising publisher, to include content associated with the advertisement item on the publisher's website. An advertisement item may be a compilation of data associated with an advertisement, promotion, or other content included on a webpage or website.

An advertisement item may be associated with a single advertisement or a group of advertisements, and may include advertising or promotional content, terms pertaining to outputting, or publishing the advertisement item, address information indicating where advertising content can be retrieved, and the like. Advertising content may be the content that is published to a potential consumer, e.g., a banner advertisement, a pop-up window advertisement, a pop-up video feed advertisement, audio advertisements, or the like. The terms pertaining to publishing the advertisement item may detail the compensation provided to an entity that publishes the advertising content. Further, the terms may include conditions and/or restrictions on the type of entities that may publish the advertising content, manners in which the advertising content may be published, dates and times when the advertising content may be published, or the like. The address information indicating where advertising content can be retrieved, may be an Internet address of any type, such as, a Uniform Resource Locator (URL), an Internet Protocol (IP) address, a folder-file path description, or the like.

An advertisement item may include a group of advertisements, also known as a campaign. An advertisement item that is a campaign may include advertising content directed to one or more advertisements, terms associated with pertaining to publishing the advertising content associated with the campaign, address information indicating where advertising content associated with the campaign can be retrieved, and the like. Accordingly, each advertisement within a campaign may also be an individual advertisement item according to various exemplary embodiments.

The advertisement items may be received from advertisement providers, such as the advertisement providers 350, 355. The apparatus 300 may receive the advertisement items via the network 325 and store the advertisement items. The advertisement providers 350, 355 may be commercial entities that make advertisement items available for use on the Internet by owners/operators of websites, widgets, video feeds, or any application that publishes advertising content to potential consumers (collectively referred to herein as websites).

According to various exemplary embodiments, the advertisement manager 330 may be configured to generate a library or list, of the one or more received advertisement items. In this regard, the list of one or more advertisement items may be organized into groupings indicating campaigns and advertisements within those campaigns. Individual advertisements may also be listed, where the advertisement may or may not be associated with a campaign. The list of one ore more advertisement items may be stored in the memory device 310.

According to some exemplary embodiments, the advertisement manager 330 may also be configured to receive a registration of a website. In this regard, for example, a publisher of advertising content, such as an owner/operator of a website, or other user, may submit a registration for a website to be received by advertisement manager 330. The website may be the target location for inclusion of advertising content. Registration of a website may be submitted and/or transmitted by a user via, for example, a user node 345.

The registration may include information regarding the website, such as the type of content included on the website, information regarding whether the website is a personal or business website, website statistics (e.g., hit rates, repeat visitor rates, visibility times, or the like), bandwidth capabilities associated with the website, or the like. The registration may also include information regarding the publisher and the publisher's business, such as whether the registrant is a distributor of particular products or services, annual sales, account information, or the like.

The advertisement manager 330 may be further configured to provide one or more advertisement items to various entities. In some exemplary embodiments, the advertisement items may be provided via the user interface 315, or via the network 325 to, for example, the user node 345. As such, the user interface 315 and the user node 345 may be configured to receive the advertisement items. In some exemplary embodiments, the one or more advertisement items may be provided to, and received by, publishers of advertising content via the user interface 315, or the user node 345.

The one or more advertisement items may be provided from the one or more advertisement items received by advertisement manager 330 from, for example, the advertisement providers. According to various embodiments, the advertisement items may be provided in the form of a list, a hierarchical group, or any other organization of advertisement items. In this regard, the publishers may access the advertisement manager 330, or memory devices associated with the advertisement manager 330, such as the memory device 310, and investigate or browse through the advertisement items provided. For example, among other things, advertising content and terms of publishing the advertising content may be investigated.

In some embodiments, based on the terms associated with an advertisement item, and/or information gathered through registration of a website, some advertisement items may be altered prior to being provided, and some advertisement items may not be provided at all. For example, if a term associated with an advertisement item indicates that only approved distributors of the advertised product may publish the advertising content associated with the advertisement item, the advertisement item need not be provided to a publisher that is not an approved distributor of the product. In a similar example, advertisement items need not be provided to publishers that do not satisfy terms regarding their website statistics as indicated in their registration.

The user interface 315 and/or the user node 345 may be configured to allow for investigation or browsing of the provided advertisement items. In this regard, a display, such as the display 28 and the keypad 30 together with the controller 20 of mobile terminal 10, or the components of the user interface 315 may be configured to provide for investigation and browsing of the advertisement items. A user, such as a publisher, may scroll through or otherwise examine the available advertisement items and the information associated with the advertisement item (i.e., content, terms, etc.).

Further, the user interface 315 and/or the user node 345 may be configured to allow for selection of desired advertisement items. In this regard, a display, such as the display 28 and the keypad 30 together with the controller 20 of mobile terminal 10 may be configured to provide for investigation and browsing of the advertisement items. A user, such as a publisher, may identify advertisement items that the publisher desires to have included on a website, and select those advertisement items. The user may select the advertisement items by clicking on the advertisement item, selecting a check box associated with the advertisement item, or the like.

Upon selection of the desired advertisement items, the user interface 315, in cooperation with the processor 305, and/or the user node 345 may transmit the selections of advertisement items. In this regard, a user, such as, a publisher may select the advertisement items that the publisher wishes to have published on the publisher's website from the provided advertisement items. For example, a publisher may desire to include three advertisements on the publisher's website, and the publisher may select the three advertisement items associated with advertisements that the publisher would prefer to include on the website. The selected advertisement items may be received by the advertisement manager 330.

In various embodiments, the advertisement manager 330 may be configured to receive selections of advertisement items from the provided advertisement items. In some embodiments, the selections of advertisement items may be received via the user interface 315, or via the network 325 from, for example, the user node 345. The advertisement manager 330 may receive the selections of individual advertisements as representations of advertisement items, advertisement items, or selections of entire campaigns of advertisements an advertisement items. In some exemplary embodiments, the advertisement manager 330 may receive selections for individual advertisements within a campaign as an advertisement item.

In some embodiments, the user interface 315, in cooperation with the processor 305, and/or the user node 345 may generate and transmit petitions for advertisement items that are not provided for selection. Further, in some embodiments, petitions may be generated to remove or alter undesirable advertisement items. In this regard, a user, such as, a publisher interacting with the user interface 315, in cooperation with the processor 305, and/or the user node 345 may cause a petition to be generated by the processor 305 or the user node 345.

In some embodiments, advertisement manager 330 may be configured to receive one or more petitions for an advertisement item that is not provided or is otherwise not desirable to a publisher. The petitions may be received via the user interface 315, or via the network 325 from, for example, the user node 345. In this regard, a publisher, while investigating and selecting various advertisements, may determine that products or services that the publisher wishes to advertise are not included in the one or more provided advertisement items or that the advertisement items provided to the publisher are not desirable. As such, the publisher may generate a petition with respect to an advertisement item. A petition may be generated with respect to an advertisement item that is currently not provided that includes a request for the advertisement item to be provided and made available for selection by the publisher. Similarly, a petition may be generated with respect to a currently provided advertisement item that requests that a different layout, form, color, look, style, or the like be provided and made available for selection by the publisher. The petition may be received by the advertisement manager 330. Based on received petitions, a demand indicator, such as a number of petitions associated with a particular product or service, type of request, or the like, may be generated for the petitioned advertisement item based on the petitions received with respect to the advertisement item. In some embodiments the petitions or the demand indicator may be transmitted to the advertisement providers 350, 355 to be acted upon by the advertisement providers 350, 355.

According to various embodiments, the advertisement manager 330 may also receive instructions to perform when a selected advertisement item is removed from the one or more provided advertisement items. In other words, advertisement manager 330 may receive instructions to perform when a selected advertisement item is no longer available for use by a publisher. The instructions may be received from the user interface 315, or via the network 325 from, for example, the user node 345. In this regard, the user interface 315 and/or the user node 345 may receive input from a user regarding the instructions, the user interface 315 and/or the user node 345 may transmit the instructions to the advertisement manager 330. As such, a publisher may provide instructions to advertisement manager 330 regarding the actions to perform in the event that a selected advertisement item is no longer available.

For example, an advertisement may be designated to run for only one month, and a publisher may provide instructions to advertisement manager 330 to provide an alternative advertisement item at the end of the month. Instructions may also be directed to providing an advertisement item that is associated with the same brand as a current selection, an advertisement item from the same category of products or services, a random advertisement item, or no advertisement item. In this manner, the publisher can provide future selections and instructions with respect to advertisement items. Various other instructions may be provided, such as requirements for notifications pertaining to the status of advertisement items. The advertisement manager 330 may receive the instructions and perform the instructions as defined.

Based on the received selections of advertisement items, the advertisement manager 330 may be configured to provide a link associated with each of the selected advertisement items. The link may be provided to, and received by, the user interface 315 or the user node 345. In some embodiments, the link associated with each of the selected advertisement items may be provided via the user interface 315, or via the network 325 to, for example, the user node 345. As such, a publisher may receive, via the user interface 315 or the user node 345 the link, where the includes an a network or Internet address, such as a URL, an IP address, a folder-file path description, or the like, and the address may be used on the publisher's website to facilitate the retrieval of advertising content to be published on the website. An exemplary link including an address may be:
<div class="imagecenter">
<a href = "http://advertisment_manager.com/ads/@x10" >
<img class="adimage" src="http://advertisement_manager.com/ads/adstream.ads/
advertisement_manager.com/@x10" alt="" height="16" width="96" /></a>
</div>.
   Further, the publisher may, according to various embodiments, take action with respect to the link, via the user interface 315 or the user node 345 to incorporate the link into a website. In various exemplary embodiments, the advertisement manager 330 may be incorporated into a website creator application and an interface may be provided for including the link in a website. Additionally, in various exemplary embodiments, a provided link may be one or more addresses.

A publisher may place the link, including one or more addresses, at desired locations on the website such that the selected advertising content may be published at those locations. In some embodiments, the provided link may be associated with a registered website by the advertisement manager 330. In situations where the selected advertisement item is a campaign, in some embodiments a link including a single address may be provided where the advertising content located at the address changes in accordance with the campaign. In other embodiments, the link associated with the campaign may include more than one address and the publisher can use the multiple addresses on the website to publish the content in conformity with the campaign.

In various embodiments, a consumer (i.e., an entity that may be a potential customer or other entity) of a website may navigate to, or other launch, a website where the received link has been included. The consumer may utilize the user interface 315 or the user node 345 to navigate to, or otherwise launch, the website. Consumer interaction with the website may generate a request for advertising contact via the link, to allow the content to be retrieved and presented to the consumer. The request may include an address associated with the link that may indicate the location of advertising content desired by the requesting device. A network interface application, such as a browser, may generate the request directly, or indirectly through a website server, such as the servers 335, 340. The advertisement manager 330 may also be configured to receive the request via the provided link. In some embodiments, the request may be received from the user interface 315, or via the network 325 from, for example, the user node 345 or the servers 335, 340.

In various embodiments, the advertisement manager 330 may be configured to provide advertising content in response to the received request. In some embodiments, the advertising content may be provided to the user interface 315, or to the network 325 to, for example, the user node 345, or to one of the servers 335, 340. As such, the user interface 315, the user node 345, or the like may be configured to receive the advertising content. The advertising content may be provided to the platform (e.g., user interface, user node, server, or the like) that a consumer may be using to navigate to, or otherwise launch the website. Moreover, the advertising content may be provided to the entity that requested the advertising content using one or more addresses associated with the link. The advertising content may be provided directly by the apparatus 300 by retrieving the advertising content from, for example, the memory device 310. In some embodiments, the advertisement manager 330 may provide the advertising content by instructing another entity, such as, the advertisement providers 350, 355 or the servers 335, 340, to provide the advertising content to the requesting entity.

The advertisement manager 330 may also be configured to provide advertising statistics and other advertising feedback data. In some embodiments, the advertising statistics and other advertising feedback data may be provided to the user interface 315, or via the network 325 to, for example, the user node 345. Accordingly, the user interface 315 and the user node 345 may be configured to receive the advertising statistics and other advertising feedback data. The advertising statistics and other advertising feedback data may be compiled by the advertisement manager 330 with regard to a particular website. In this manner, a publisher may access advertising statistics and other advertising feedback data to gain insights on the success of particular advertisement items on a website.

Additionally, or alternatively, the advertisement manager 330 may be configured to provide for managing advertising based on the preferences of users of a website. In this regard, an advertising preference may be any data that defines a description of the types of advertising content a user would prefer or types of advertising content a user would not prefer.

In some embodiments, advertising preferences may be generated and/or managed by the advertisement manager 330 or the user node 345 in communication with the advertisement manager 330. The advertising preferences may be stored local to the user, such as, for example, on the memory within the user node 345, or remote from the user, such, for example, in the memory device 310 or on the servers 335, 340. The advertising preferences may be stored in association with the user.

Advertising preferences may be user-defined and, as such, a user may configure advertising preferences via the user interface 315 or the user node 345. As such, a user may directly define the types of advertising content the user would prefer or not prefer. For example, if a user is a smoker and would prefer not to be presented with advertisements directed toward quitting smoking, an advertising preference may be set that indicates that no advertisement directed toward quitting smoking should be provided to the user. Further, if a user would prefer not to receive advertisements from a particular advertisement provider, an advertising preference may be set accordingly. Additionally, if a user is currently seeking to buy an automobile, an advertising preference may be set to include advertising content directed to automobiles where possible.

In some embodiments, the advertising preferences may be defined based upon a user's activities, and in this manner the user interface 315 in association with the processor 305, or the user node may track the activities of the user and define advertising preferences based on the tracked activities. For example, if a user has been consistently browsing car manufacturer websites, then an adverting preference may be set with respect to automobile advertisements based on the user's activity. Additionally, in some embodiments, advertising preferences may be automatically formed from gathered information, such as the information provided by a publisher during website registration.

Further, advertising preferences may be gathered by the advertisement manager 330 or user node 345 in communication with advertisement manager 345 based on the type of device a user is using to access a website. In this regard, a particular advertisement provider may be preferred over another when the user is accessing a website from a mobile terminal because, for example, the advertisement provider may provide advertising content that is designed for use on a mobile terminal screen. Advertising preferences may also be set based upon the manufacturer of the mobile terminal, or the communications system to which the mobile terminal is currently connected. Additionally, identity information and location information, accessed possibly via a GPS receiver on a mobile terminal, may be included or otherwise considered when setting advertising preferences for a user.

The advertising preferences may be stored local to the user, such as at the user node 345, or remotely, such as in the memory device 310 of the apparatus 300 or the servers 335, 340. The advertising preferences may be stored as web cookies or other collections of data used for authenticating, tracking, and maintaining specific information about users.

As such, the advertisement manager 330 may receive a request for advertising content when a user navigates to, or otherwise launches a website. The request may be received from the user interface 315, or via the network 325 from, for example, the user node 345 or the servers 335, 340, as described above. The request may be received in accordance with a link to advertising content and, in some embodiments, a link to advertisement manager 330. In some embodiments, the request may include an address of advertising content, associations with web cookies including data about a user, a header for fetching advertising content, and/or the like.

The advertisement manager 330 may be configured to provide for the retrieval of advertising preferences. In this regard, the advertisement manager 330 may provide for the retrieval of advertising preferences via communication with the memory device 310, or via the network 325 from, for example, the user node 345. In this regard, the advertisement manager 330 may also receive an indication (e.g., a login name) of the entity associated with the advertising preferences and the indication of the entity may be used to facilitate retrieval of the advertising preferences.

The advertisement manager 330 may also be configured to provide advertising content based on the retrieved advertising preferences. In some embodiments, the advertising content may be provided via the user interface 315, or via the network 325 to, for example, the user node 345, or to one of the servers 335, 340. In this regard, the advertisement manager 330 may analyze the retrieved advertising preferences against various advertising content to identify advertising content that complies with the advertising preferences. Advertising content may be provided in accordance with the advertising preferences of the user of the requesting device, such as the user node 345. For example, if an advertising preference indicates that the user does not prefer advertisements derived from the advertisement provider 350, then no advertisement may be provided that originates from advertisement provider 350. An advertisement from an alternative advertisement provided may be provided. In some embodiments, another advertisement item that was selected by a publisher that meets the advertising preferences of the user may be transmitted.

The advertisement manager 330 may provide the advertising content directly from the memory device 310. In this regard, the advertisement manager 330 may retrieve advertising content from the advertisement providers 350, 355 in response to receipt of the request, and relay the advertising content to the requesting device. In some embodiments, the advertisement manager 330 may have previously retrieved and stored the requested advertising content from the advertisement providers 350, 355, and as such advertisement manager 330 may provide the advertising content without further interaction with an advertisement provider. In some embodiments, the advertisement manager 330 may provide the advertising content directly from another network entity, such as advertisement providers 350, 355 or servers 335, 340.

The user interface 315 and/or the user node 345 may be configured to receive the advertising content that has been identified as complying with the advertising preferences. Further, the user interface 315 and/or the user node 345 may be configured to present the advertising content to the user.

Additionally, in some embodiments, the advertisement manager 330 may be configured to reverse charge a fee to an advertisement provider if the user selects or otherwise interacts with advertising content that has been provided. In this regard, fees associated with connection time or data received may be directed to the advertisement provider rather than to the potential consumer.

The advertisement manager 330 may also be configured to provide an advertising preference modification interface. The advertising preference modification interface may be provided together with the advertising content. In this regard, the advertisement manager 330 may provide for the transmission of the advertising preference modification interface to the user interface 315, or via the network 325 to, for example, the user node 345. Accordingly, the user interface 315 or the user node 345 may be configured to receive the advertising preference modification interface with or without the advertising content.

In this regard, the advertisement manager 330 may also be configured to manage the advertising preferences. The advertising manager 330 may do so by providing an advertising preference modification interface. The user interface 315 or the user node 345 may receive the advertising preference modification interface and receive modifications from a user. Accordingly, the user interface 315 or the user node 345 may transmit the modifications to the advertising preferences for receipt by advertisement manager 330. In some embodiments, the advertisement manager 330 may provide advertising content based on the modified advertising preferences.

The advertising preference modification interface may allow a user to modify their current advertisement preferences, such as the currently selected advertisement provider. As such, an advertising preference modification interface may include selectable types and alternatives of advertising content. In some embodiments, the alternatives may include advertising providers, advertising campaigns, advertisement items, or combinations thereof. The user may modify the advertising preferences via various means including the user interface 315, the user node 345, or the like. The user interface 315 or user node 345 may receive the modification of user preferences. In this regard, upon receipt of the advertising preference modification interface, the user interface 315 or the user node 345 may allow for interaction with the advertising preference modification interface to modify advertising preferences. In this regard, a list or arrangement of options for advertising preference modifications may be presented to the user. As such, the user may interact with the advertising preference modification interface to modify the advertising preferences and provide the modifications to advertisement manager 330.

The advertisement manager 330 may subsequently provide for advertising content that complies with the newly modified advertisement preferences. As such, the user interface 315 and/or the user node 345 may be configured to receive the advertising content that complies with the newly modified advertisement preferences. As such, through the use of the advertising preference modification interface the user may modify advertisement preferences which may be used as the user navigates to, or otherwise launches, websites in the future. Upon selecting various preferences with regard to advertising, the selected preferences may be stored locally, for example in a web cookie, or the preferences may be stored in the memory device 310 associated with the advertisement manager 330.

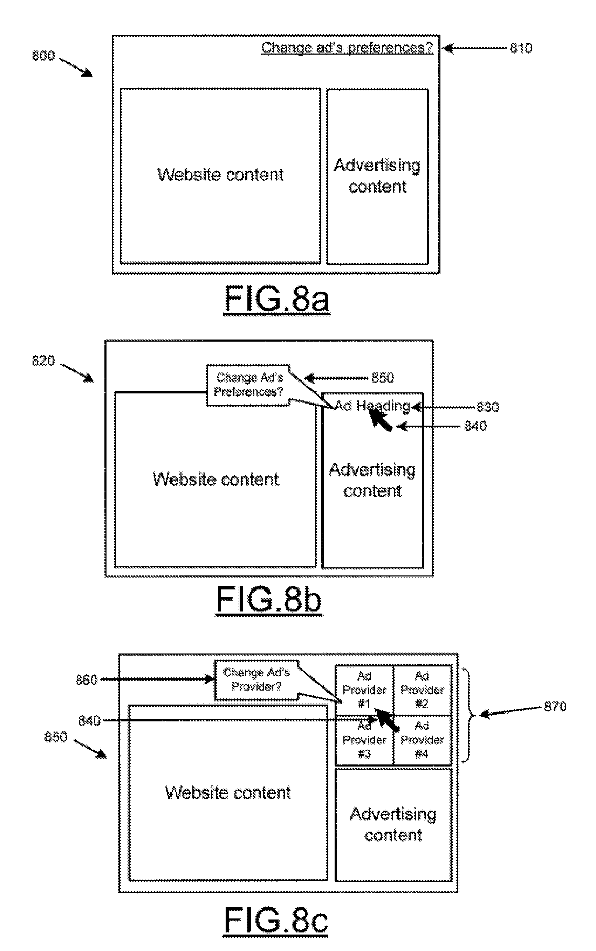

Exemplary advertising preference modification interfaces are depicted in FIGs. 8a through 8c. FIG. 8a includes a display 800 where website content and advertising content may be displayed. Display 800 may include an advertising preference modification interface 810, where the advertising preference modification interface 810 is an explicit link that a user may select using, for example, the user interface 315 to modify the user's advertising preferences.

FIG. 8b depicts an alternative exemplary embodiment. The display 820 may include advertising content that includes an ad heading 830. When a user mouses over the heading 830 with mouse pointer 840 an advertising preference modification interface 850 may appear as a pop-up callout, which can be used to make modifications to a user's advertising preferences. In some embodiments, the pop-up callout may provide a selectable link to an advertising preference modification interface.

FIG. 8c depicts another alternative exemplary embodiment. The display 850 may include advertising content, as well an advertising preference modification interface 870. In the exemplary embodiment of FIG. 8c, the advertising preference modification interface may be interacted with directly by a user. For example, a user may mouse over Ad provider #1 with the mouse pointer 840 and select (e.g., click on) Ad provider #1. This selection process may modify the advertising preferences associated with the user. As such, new advertising content may be provided and presented based on the selection of ad provider 1. Pop-up callout 860 may indicate to a user that the ad providers are selectable areas of the advertising preference modification interface 870 where adverting preferences may be modified.

Further, while exemplary embodiments of the present invention are mostly described with respect to advertisements and advertising content, embodiments of the present invention are equally applicable to any type of content presented in association with a website. For example, embodiments of the present invention may be directed to various data presentations on websites, such as test results in a laboratory environment, real estate listings, directory information and the like.

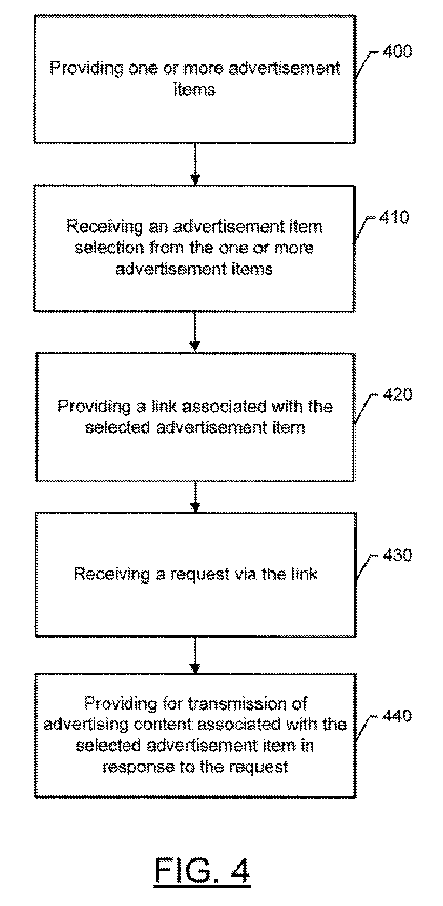

FIGs. 4-7 are flowcharts of a system, method and program product according to exemplary embodiments of the invention. It will be understood that each block or step of the flowcharts, and combinations of blocks in the flowcharts, can be implemented by various means, such as hardware, firmware, and/or software including one or more computer program instructions. For example, one or more of the procedures described above may be embodied by computer program instructions. In this regard, the computer program instructions which embody the procedures described above may be stored by a memory device of the apparatus and executed by a built-in processor in the apparatus. As will be appreciated, any such computer program instructions may be loaded onto a computer or other programmable apparatus (i.e., hardware) to produce a machine, such that the instructions which execute on the computer or other programmable apparatus create means for implementing the functions specified in the flowcharts block(s) or step(s). These computer program instructions may also be stored in a computer-readable memory that can direct a computer or other programmable apparatus to function in a particular manner, such that the instructions stored in the computer-readable memory produce an article of manufacture including instruction means which implement the function specified in the flowcharts block(s) or step(s). The computer program instructions may also be loaded onto a computer or other programmable apparatus to cause a series of operational steps to be performed on the computer or other programmable apparatus to produce a computer-implemented process such that the instructions which execute on the computer or other programmable apparatus provide steps for implementing the functions specified in the flowcharts block(s) or step(s).

Accordingly, blocks or steps of the flowcharts support combinations of means for performing the specified functions, combinations of steps for performing the specified functions and program instruction means for performing the specified functions. It will also be understood that one or more blocks or steps of the flowcharts, and combinations of blocks or steps in the flowcharts, can be implemented by special purpose hardware-based computer systems which perform the specified functions or steps, or combinations of special purpose hardware and computer instructions.

In this regard, one embodiment of a method for managing advertising as provided in FIG. 4 may include providing one or more advertisements at operation 400. The method may further include receiving an advertisement item selection from the one or more advertisement items at operation 410 and providing a link associated with the selected advertisement item at operation 420. Additionally, the method may include receiving a request via the link at operation 430, and providing advertising content associated with the selected advertisement item in response to the request at operation 440.

In some embodiments, providing the link associated with the selected advertisement item may include the selected advertisement item being a campaign of advertisements. In this regard, the link may also include one or more addresses to corresponding advertising content. In such embodiments, providing advertising content may further include providing advertising content based on the one or more addresses.

In an exemplary embodiment, the method may also include additional optional operations. In this regard, for example, the method may further include receiving a registration from a website. Additionally, in such embodiments, the link may be associated with the registered website. Further, in some embodiments, receiving the registration of a website may include gathering information about the website or the publisher of the website, and the one or more advertisement items may be provided based on the gathered information.

Further, in an exemplary embodiment, the method may include other alternative or additional operations such as receiving one or more petitions for an advertisement item not included in the provided one or more advertisement items, and generating a demand indicator for the advertisement item not included in the provided one or more advertisement items.

Exemplary embodiments of the method may further include receiving one or more advertisement items, and wherein providing the one or more advertisement item includes providing the one or more advertisement items from the received one or more advertisement items. In this regard, the advertisement items may include advertising content and terms regarding publishing the advertising content. Further in this regard, terms may include information regarding financial compensation for publishing the advertising content. Additionally, in some embodiments, the method may further include receiving instructions to perform if the selected advertisement item is removed from the provided one or more advertisement items.

Further, in some embodiments, the operation of providing advertising content may comprise managing advertising preferences by providing an advertising preference modification interface that includes selectable alternatives of advertising content. The alternatives of advertising content may include advertising providers, advertising campaigns, advertising items, or combinations thereof. The operation of providing advertising content may also comprise receiving modification to advertising preferences, and providing advertising content based on the modified advertising preferences.

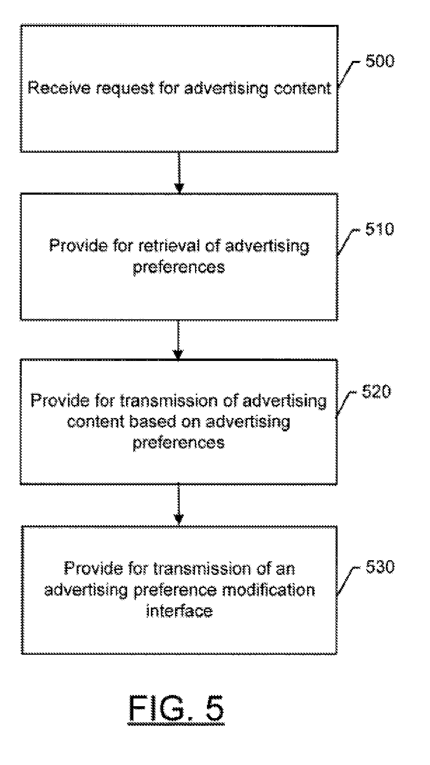

Additionally, another embodiment of a method for managing advertising as provided in FIG. 5 may include receiving a request for advertising content at operation 500. The method may further include providing for retrieval of advertising preferences at operation 510 and providing advertising preferences at operation 520. Additionally, the method may include providing an advertising preference modification interface at operation 530.

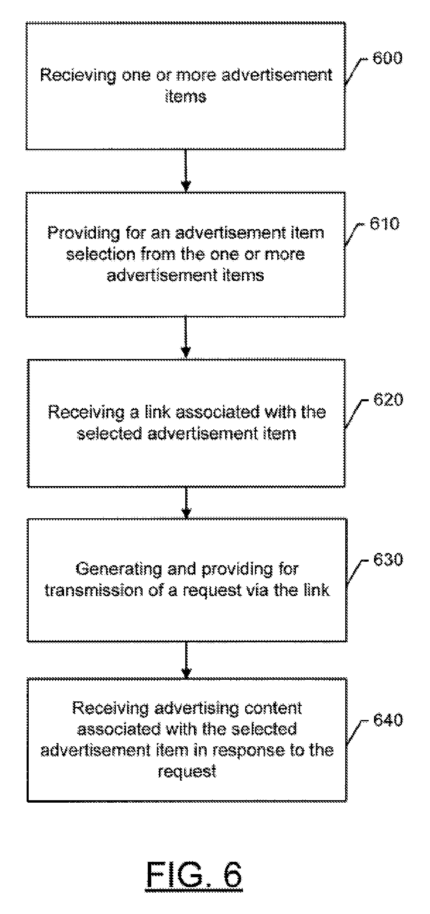

Another embodiment of a method for managing advertising is provided in FIG. 6. The exemplary method may include receiving one or more advertisements items at operation 600 and providing for an advertisement item selection form the one or more advertisement items at 610. A link associated with the selected advertisement items may be received at operation 620. The method may also include applying the link to a website. Further, a request may be generated and transmission of the request may be provided for via the link at operation 630. In this regard, the request may be generated in response to navigating to, or otherwise launching a website. Further, at operation 640, advertising content associated with the selected advertisement item may be received in response to the request.

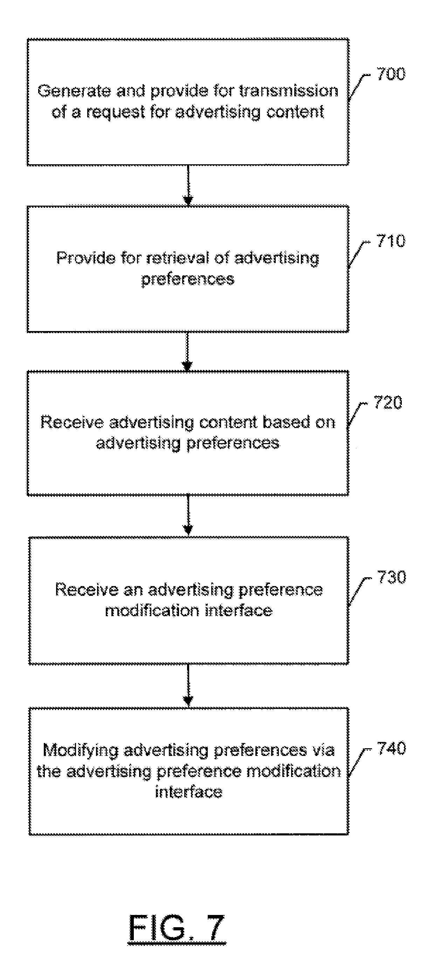

Yet another embodiment of a method for managing advertising is provided in FIG. 7. The exemplary method may include generating and providing a request for advertising content at operation 700. The method may also include providing for retrieval of advertising preferences at operation 710 and receiving advertising content based on advertising preferences at operation 720. The method may further include receiving an advertising preference modification interface at operation 730. In some embodiments, the advertising modification interface may be received together with the advertising content. The method may also include modifying advertising preferences via the advising preference modification interface.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method comprising:
providing one or more advertisement items;
receiving an advertisement item selection from the one or more advertisement items; providing a link associated with the selected advertisement item;
receiving a request via the link; and
providing advertising content associated with the selected advertisement item in response to the request.

2. The method of claim 1 further comprising:
receiving a registration of a website; and
associating the link with the website.

3. The method of claim 2, wherein receiving the registration of a website includes gathering information, and wherein providing one or more advertisement items is based on the gathered information.

4. The method of any of claims 1 to 3, further comprising:
receiving one or more petitions for an advertisement item not included in the provided one or more advertisement items; and
generating a demand indicator for the advertisement item not included in the provided one or more advertisement items.

5. The method of any of claims 1 to 4, further comprising receiving instructions regarding actions to perform if the selected advertisement item is removed from the provided one or more advertisement items.

6. The method of any of claims 1 to 5, wherein providing advertising content comprises:
managing advertising preferences by providing an advertising preference modification interface that includes selectable alternatives for advertising content, the alternatives including different advertising providers, different advertising campaigns, different advertisement items, or combinations thereof;
receiving modifications to advertising preferences; and
providing advertising content based on the modified advertising preferences.

7. A computer program product comprising at least one computer-readable storage medium having computer-readable program code portions stored therein, the computer-readable program code portions providing means to implement any of steps of claims 1 to 6 when executed on a programmable apparatus.

8. An apparatus comprising a processor configured to:
provide one or more advertisement items;
receive an advertisement item selection from the one or more advertisement items; provide a link associated with the selected advertisement item;
receive a request via the link; and
provide advertising content associated with the selected advertisement item in response to the request.

9. The apparatus of claim 8, wherein the processor is further configured to:
receive a registration of a website; and
associate the link with the website.

10. The apparatus of claim 9, wherein the processor configured to receive the registration of a website includes being configured to gather information, and wherein processor configured to provide one or more advertisement items includes being configured to provide one or more advertisement items based on the gathered information.

11. The apparatus of any of claims 8 to 10, wherein the processor is further configured to:
receive instructions regarding actions to perform if the selected advertisement item is removed from the provided one or more advertisement items.

12. The apparatus of any of claims 8 to 11, wherein the processor is further configured to:
receive one or more petitions for an advertisement item not included in the provided one or more advertisement items; and
generate a demand indicator for the advertisement item not included in the provided one or more advertisement items.

13. The apparatus of any of claims 8 to 12, wherein the processor configured to provide advertising content comprises being configured to:
manage advertising preferences by providing an advertising preference modification interface that includes selectable alternatives for advertising content, the alternatives including different advertising providers, different advertising campaigns, different advertisement items, or combinations thereof;
receive modifications to advertising preferences; and
provide advertising content based on the modified advertising preferences.

14. An apparatus comprising:
means for providing one or more advertisement items;
means for receiving an advertisement item selection from the one or more advertisement items;
means for providing a link associated with the selected advertisement item;
means for receiving a request via the link; and
means for providing advertising content associated with the selected advertisement item in response to the request.
